Europäisches Patentamt

**European Patent Office**

**Office européen des brevets**

(19)

(11) Publication number: **0 045 286**

A2

# (12) EUROPEAN PATENT APPLICATION

(21) Application number: **81830117.8**

(22) Date of filing: **14.07.81**

(51) Int. Cl.³: **H 02 J 3/14**
// H02H3/04

(30) Priority: **29.07.80 IT 4936780**

(43) Date of publication of application: **03.02.82**
**Bulletin 82/5**

(84) Designated Contracting States: **BE CH DE FR GB LI**

(71) Applicant: **Basini, Bruno, via Colleferro 5, I-00189 Rome (IT)**

(72) Inventor: **Basini, Bruno, via Colleferro 5, I-00189 Rome (IT)**

(54) **Electronic indicator of absorbed current, expressed as a percentage of a prefixed limit, the exceeding of which activates an acoustic alarm.**

(57) The invention consists of an electronic device which gives a visual indication of the electric current absorbed by a user, expressed as a percentage of a prefixable maximum value, set by the user.

If the absorbed current this maximum value, an acoustic signal is activated. The user, so warned, can reduce the load before the normal magnetothermal overload circuit breaker intervene, with a delay depending on the amount of overload, and interrupt the current supply.

EP 0 045 286 A2

ELECTRONIC INDICATOR OF ABSORBED CURRENT,

EXPRESSED AS A PERCENTAGE OF A PREFIXED

LIMIT, THE EXCEEDING OF WHICH ACTIVATES

AN ACOUSTIC ALARM.

Automatic switchs are used in electrical plants for protection against short circuits and overloads. These circuit breakers, for example, in domestic installations are placed immediately at the output of the supply meter, interrupting the supply as soon as a determined current limit is exceeded, this will be referred to as Imax in the description. As is knovn these automatic switchs generally contain two different devices: the first device of the electro-magnetic fast-acting type opens the circuit in the case of a short circuit. It is adjusted so that it operates only for values of current very much higher than Imax (e.g. ten times Imax).

The second device of the thermic delayed action type is adjusted so that it operates in a time which is inversely proportional to the current overload; e.g. a typical magnetothermal circuit breaker can withstand currents of up to 5% higher than Imax indefinitely whereas overloads of 35% and 100% of Imax cause the device to operate in times of one hour and 30 seconds respectively.

Normally the user become aware of having exceeded Imax only after the magnetothermal switch has operated, with consequent interruption of the power supply. Therefore he restores the power supply by means of the switch pushbutton, after having reduced the current consumption by disconnecting some of the loads.

The disadvantages that normally occur are:

-The interruption of the current, even for a brief period, causes inconvenience (sudden loss of lighting, interruption of various services, etc.)

-Transitory phenomena associated with the switching off and with the subsequent reconnection cause wear which to a certain degree shortens the life of the electrical equipment (electrical appliances, fluorescent lamps, etc.)

—Usually the user does not know, or knows only approximately, the current absorbed by the various loads and therefore does not know the extent of the overload which has caused the magnetothermal switch to operate. The reduction in load which he makes before restoring the supply may be therefore insufficient (and thus such as to cause a further interruption after a certain period) or excessive (and therefore such as to cause the unnecessary elimination of some services).

The device described here overcomes these disadvantages: being placed immediately after the magnetothermal switch, it gives a continuous visual indication of the current absorbed, expressed as a percentage of Imax. It also generates an acoustic alarm signal whenever Imax is reached or exceeded, so that the user can intervene immediately to reduce the load before the operation of the thermal releasing device wich, as was stated, is delayed in operation with respect to the overload.

The new value of the current absorbed, with respect to Imax, can easily be checked by the user.

For simplicity this description concerns only the case of an installation of monophase alternating current. Clearly, however, the device can be installed on each phase of an installation of several phases, as indeed on installations using direct current.

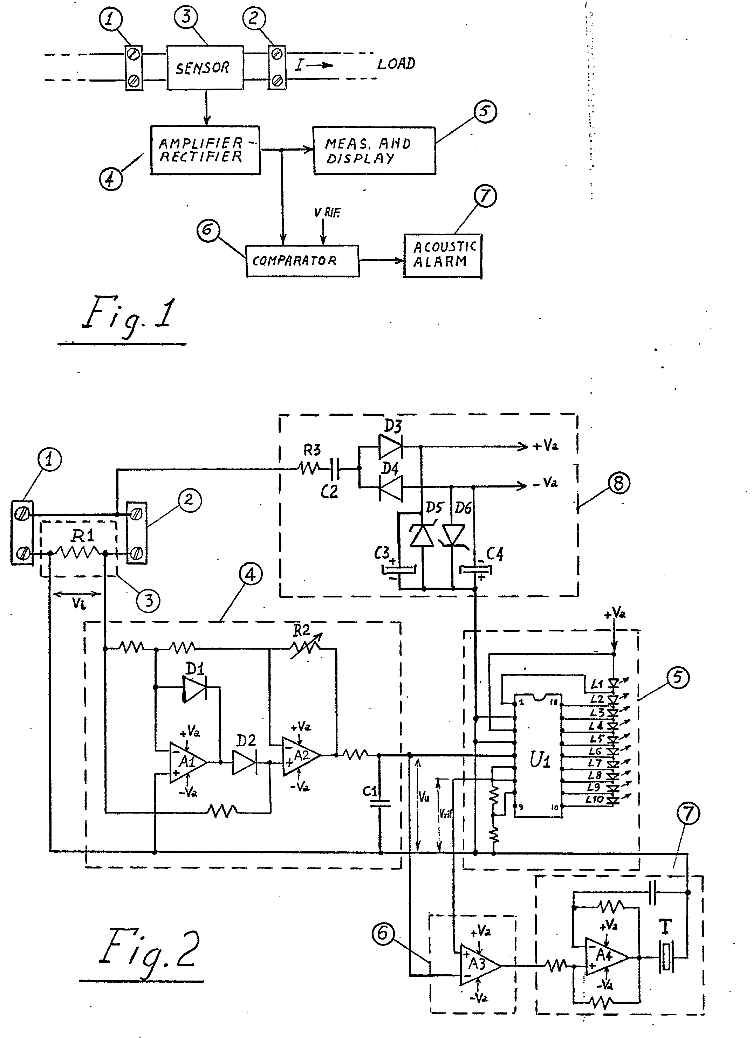

The block diagram is shown in Fig.1. The device is placed immediately at the output of the magnetothermal switch (not shovn in the figure) and connected to it by means of the terminals (1). The terminals (2) are connected to the user's load.

A sensor (3), etrough which the current I absorbed by the user passes, and which may be constituted by a current transformer or, preferably, by a very low value resistor, sends an electrical signal proportional to the said current to an amplifier-rectifier (4). A d. c. voltage which is proportional to the current absorbed by the user appears at the output of the amplifier-rectifier.

This voltage is measured and displayed in the circuit (5), having an optical indicator graduated from 0 to 100.

By adjustment of the gain of the amplifier-rectifier circuit it is possible to make the indication 100 correspond to the value of current absorbed lmax.

When this value is reached, a comparator circuit (6)
activates an acoustic alarm (7).

By way of an example which is not intended to be
limitative, a pratical realisation of the circuit of the
device is described with reference to Fig. 2.
Such realisation, avoiding the use of transformers both
for the current sensor and for the d.c. power supply, is
very cheap and small, suitable to be contained, if required,
in the same housing of the automatic switch.
It is understood that both with regard to the type of
active electronic components and the values of passive
components, these are given purely as an example. For
greater clarity the parts of the circuit shown within
dotted lines are identified by the same index numbers as
those used for the corresponding parts in the block diagram in Fig. 1.

The sensor (3) is formed by the resistor R1 which,
being placed between the input terminals (1) and the output terminals (2), passes the current absorbed by the
user. Resistor R1 is of very low value (e.g. 0,01 ohm)
and such, therefore, as to produce a very small voltage
drop, even for high currents. The voltage Vi across R1,
proportional to the current which passes through it, is
amplified and rectified by the circuit (4) containing the
two operational amplifiers A1 and A2 and the two diodes

D1 and D2. The variable resistor R2 varies the proportional relationship between the d.c. voltage Vu appearing across the capacitor C1 and the voltage Vi across the resistor R1. The voltage Vu, applied to the input of the circuit (5) which uses a "Bar Display Driver" integrated circuit U1 (e.g. the commercial type known as LM 3914) causes the sequential lighting of the ten light emitting diodes L1, L2,...L10, aligned so as to form a bar optical display device. The number of the diodes lit, and therefore the length of the luminous bar, is proportional to the voltage Vu and therefore to the current absorbed by the user. By adjusting the variable resistor R2 all ten diodes may be caused to light when the current is Imax. The control of R2 which is accessible on the outside of the unit can be directly calibrated in Amps. At every instant the number of diodes lit gives a measurement of the current being absorbed by the user, expressed as a percentage of Imax with an inaccuracy of within 10% of Imax The voltage Vu besides going to circuit (5) is also fed to circuit (6) formed by the operational amplifier A3 which compares that voltage with a stable reference voltage Vrif taken from the integrated circuit U1. This reference voltage is equal to the value of Vu which causes the lighting of all ten diodes.

When the voltage Vu reaches or exceed the reference voltage, the circuit (6) triggers the oscillator (7), realised with the amplifier A4 and the piezoelectric transducer T, thus generating the acoustic alarm.

There are integrated circuits available on the market which house four operational amplifiers in a single container so that the active part of the device can be realised with only two integrated circuits: one to contain the amplifiers and the other for the display driver.

The d.c. power supplyes (which may be for example +20V and -20V) are taken from the terminals of the device via the circuit (8) formed by the resistor R3, the capacitors C2, C3, C4. the rectifying diodes D3 and D4 and the zener diodes D5 and D6. No transformers are used: the voltage drop is obtained by means of C2, which constitute a suitable series reactance for the rectifying diodes D3 and D4.

CLAIMS

1.  Electronic indicator device showing electrical current absorbed by a user, expressed as a percentage of a prefixed limit, characterised by the fact that on exceeding this limit it activates an acoustic alarm.

2.  Device as in claim 1, Characterised by the fact that it allows the adjustment of the value of the basic scale, both of the indicator and of the threshold of the acoustic alarm, by means of a control accessible to the user and provided with a graduated scale in Amps (or in KW, assuming that the supply voltage remains constant).

3.  Device as in the preceding claims characterised by the fact that it takes advantage of the delay with which a magnetothermal circuit breaker normally operates after the detecting of the overload (and therefore from the beginning of the acoustic signal such as in claim 1) to immediately reduce the load in an adequate and controlled manner before the operation of the automatic overload circuit breaker protecting the installation.

0045286

-2-

4. Device as in preceding claims, characterised by the fact that the current sensor is constituted by a very low value resistor.

5. Device as in preceding claims, characterised by the fact that the relatively low voltages for the d.c. supply are obtained by means of a capacitive series reactance.

**Fig.1**

**Fig.2**

1/1    0045286